# EUROPEAN PATENT APPLICATION

(11) **EP 2 413 251 A1**
(43) Date of publication of application: **01.02.2012**
(21) Application number: 09842102.7
(22) Date of filing: 26.11.2009
(51) Int. Cl.: G06F 17/30

(54) **DISTRIBUTED FILE SYSTEM OF SUPPORTING DATA BLOCK DISPATCHING AND FILE PROCESSING METHOD THEREOF**

(30) Priority: 25.03.2009 CN 200910106411
(71) Applicant: ZTE Corporation, Shenzhen, Guangdong 518057 (CN)
(72) Inventor: PENG, Jie, Guangdong 518057 (CN); ZHANG, Bo, Guangdong 518057 (CN); XIA, Jianbo, Guangdong 518057 (CN); WANG, Chong, Shenzhen, Guangdong 518057 (CN); CHENG, Ning, Shenzhen, Guangdong 518057 (CN)
(74) Representative: Jansen, Cornelis Marinus
(86) International application number: PCT/CN2009/075156
(87) International publication number: WO 2010/108368

(57) **Abstract**

A distributed file system and a file processing method thereof are disclosed. The distributed file system comprises at least two file nodes (1, 2, ..., n), and each file node comprises a metadata server (12, 22, ..., n2), a file access client (11, 21, ..., n1), a file access server (13, 23, ..., n3) and a storage medium (14, 24, ..., n4), and file nodes can access each other. The file processing method comprises the steps of: storing different files in each file node in a scattered way; for each file node, users of the current file node firstly accessing metadata/valid data of a required file in the file node through the file access client of the file node; if the metadata/valid data of the required file are not found in the file node, the users access other nodes through the file access clients. The present invention effectively solves the problem that a metadata server is easy to become a performance bottleneck when a great number of users access hot data concurrently, and can furthest release the storage space of some file nodes by the file processing methods, such as data block dispatching and data block aging, thereby greatly increasing the utilization ratio.

## Description

### Technical field

The present invention relates to the technical field of data storage, particularly to a distributed file system supporting data block dispatching and a file processing method thereof for accessing and dispatching data.

### Background

With the rapid development of internet and multimedia industry, various storage technologies and storage systems develop rapidly. These storage systems provide convenient, rapid and high-efficient storage and access services for mass internet information and multimedia data information.

At present, storage systems are mainly divided into two kinds, one is a commercial disk array, such as a Storage Area Network (SAN), Network Attached Storage (NAS), and the other is using common or commercial disks and managing these disks through a distributed file system. The stability, reliability and access speed of the commercial disk array can be guaranteed, but it is disadvantaged by high cost and bad customizability. Since most of distributed file systems are researched and developed independently by manufacturers and a common hard disk is used as a storage medium, cost, customizability and maintainability of the distributed file systems all can be guaranteed; therefore, a lot of manufactures adopt such manner to build their own storage systems.

In a distributed file system, generally there is only one metadata server which is responsible for managing metadata, such as a directory/file name and a file data block (likely to be different according to specific embodiments), in the whole system. Access to the distributed file system by a client relates to an operation on metadata, that is, it is a many-to-one relationship between the client and the metadata server; thereby the metadata server is easy to become the performance bottleneck of the whole system. In an application scene which is easy to form a hotspot, such as interactive Internet Protocol Television (IPTV), when a great number of users access some contents concurrently, the problem of performance bottleneck is particularly obvious.

Content dispatching is an important function required to be implemented by a Content Delivery Network (CDN) system, the CDN needs the distributed file system to store data. At present, the content dispatching in the CDN system is completed mainly by a content management module which, after detecting that some program is a hotspot, pushes the program from a center node or a regional center to an edge node; the above content dispatching mode has the following disadvantages:
firstly, dispatching takes a program as a unit and the granularity is too big, which is easy to cause great waste of a network bandwidth (currently, most general programs are hundreds of megabytes (M) or beyond one gigabyte (G), the size of standard or high definition programs is larger); in particular when edge node users just need to watch some segment of the program, the waste is particularly obvious;
secondly, because it is impossible to provide other services for users before completing the content dispatching, the mode influences the user experience to a certain extent;
in addition, because the demands for watching program from users of each file node are very likely different, and the content dispatching is initiated by the content management module, the dispatching precision cannot be guaranteed.

### Summary

One aspect of the present invention is to provide a distributed file system supporting data block dispatching, which can save the bandwidth of content dispatching and improve the dispatching precision.

Another aspect of the present invention is to provide a file processing method of the distributed file system supporting data block dispatching, which can save the bandwidth of content dispatching and improve the dispatching precision.

To solve the technical problem above, the present invention adopts the following solutions.

A distributed file system supporting data block dispatching, comprises at least two file nodes, each file node comprising a metadata server, a file access client, a file access server and a storage medium; wherein
the metadata server is arranged to manage metadata of a file stored in a file node to which the metadata server belongs ;
the file access client is arranged to provide a calling interface for a user of the file node to which the file access client belongs, read and write metadata in the metadata server of the file node or metadata servers of other file nodes, and send a request for reading and writing relevant valid data to the file access server of the file node or file access servers of other file nodes, according to the metadata;
the file access server is arranged to interact with the storage medium in the file node to which the file access server belongs, complete reading and writing of valid data, respond to the request for accessing valid data from the file access client of the file node or file access clients of other file nodes, and read relevant valid data from the storage medium of the file node, according to the metadata in the metadata server and return the valid data to the file access client(s); and
the storage medium is arranged to store the valid data of the file stored in the file node to which the storage medium belongs.

The distributed file system may further comprise a configuration unit which is arranged to configure a dependence relationship among the file nodes in the distributed file system and send the dependence relationship to each file node;
wherein, the file access client may be further arranged to check the dependence relationship from the configuration unit when metadata/valid data of a required file are not found in the file node to which the file access client belongs, and determine a file node where the required file is stored.

The each file node may further comprise a broadcast unit which is arranged to send a broadcast message to file access clients of other file nodes when the file access client of the file node fails to find the metadata/valid data of the required file in the file node, and determine the file node where the file required by the user of the file node is stored, according to responses from the file access clients, and inform the file access client of the file node.

The metadata server may be further arranged to preset an access hotspot value, count times of accessing valid data of the file which are not stored in the file node by the user of the file node to which the metadata server belongs, copy valid data which are accessed for times more than the access hotspot value from other file nodes to the local part through the file access client of the file node, and write the valid data into the storage medium of the file node through the file access server of the file node, at the same time, create metadata relevant to the valid data in the metadata server of the file node.

The metadata server may be further arranged to preset a minimum access value and a space utilization ratio threshold value, count times of accessing valid data of the file which are stored in the file node by the user of the file node, and when a space utilization ratio of the storage medium of the file node exceeds the space utilization ratio threshold value, inform the storage medium of the file node to delete valid data stored therein which are accessed for times less than the minimum access value, at the same time, delete metadata, which are relevant to valid data which are accessed for times less than the minimum access value, stored in the metadata server of the file node.

A file processing method of a distributed file system, wherein the distributed file system comprises at least two file nodes, each file node comprises a metadata server, a file access client, a file access server and a storage medium; the file processing method comprises:
storing different files in each file node in a scattered way;
for each file node, firstly accessing metadata/valid data of a required file in the file node by a user through the file access client of the file node; if the metadata/valid data of the required file are not found in the file node, accessing other nodes by the user through file access clients.

Before the step of accessing the metadata/valid data of the required file, the file processing method may further comprise: configuring a dependence relationship table among the file nodes in the distributed file system, and sending the dependence relationship table to each file node; the other file nodes are ones having a dependence relationship with the currently accessed file node.

The step of accessing other file nodes through file access clients may comprise:
for each file node, if the user of the file node fails to find the metadata/valid data of the required file in the file node, sending a broadcast message to all other file nodes to inquire if they store the required file, determining a file node where the file required by the user of the file node is stored according to responses from the other file nodes, and then directly accessing the metadata/valid data of the required file in the determined file node through the file access client.

The method may further comprise:
presetting an access hotspot value;
for each file node, counting times of accessing valid data of the file which are not stored in the file node by the user of the file node through the file access client; copying valid data which are accessed for times more than the access hotspot value from other file nodes to the local part through the file access client of the file node, and writing the valid data into the storage medium of the file node, at the same time, creating metadata relevant to the valid data in the metadata server of the file node.

The method may further comprise:
presetting a minimum access value and a space utilization ratio threshold value;
for each file node, counting times of accessing valid data of the file which are stored in the file node by the user of the file node, and when a space utilization ratio of the storage medium of the file node exceeds the space utilization ratio threshold value, deleting valid data, stored in the storage medium of the file node, which are accessed for times less than the minimum access value; at the same time, deleting metadata, which are relevant to valid data which are accessed for times less than the minimum access value, stored in the metadata server of the file node.

On one hand, compared with the existing distributed file system with a single metadata server, the distributed file system supporting data block dispatching, which is provided by the present invention, largely saves the storage space of an edge node; on the other hand, compared with the existing dispatching strategy based on PUSH, the distributed file system of the present invention adopts a dispatching strategy based on PULL, which improves the dispatching accuracy and precision. Furthermore, since the present invention reduces the dispatching granularity, the bandwidth and the dispatching time length are saved, and the user experience is improved.

The present invention effectively solves the problem that a metadata server is easy to become a performance bottleneck when a great number of users access hot data concurrently, and can further release the storage space by the file processing methods, such as data block dispatching and data block aging, thereby greatly increasing the utilization ratio.

### Brief description of the drawings

Fig. 1 shows a structural diagram of a distributed file system of the present invention;
Fig. 2 shows a flowchart of an embodiment of a method for accessing metadata of a distributed file system of the present invention;
Fig. 3 shows a flowchart of an embodiment of a method for accessing valid data of a distributed file system of the present invention; and
Fig. 4 shows a structural diagram of an embodiment of a distributed file system of the present invention.

### Detailed Description

The present invention is further described in detail below with reference to the accompanying drawings and embodiments.

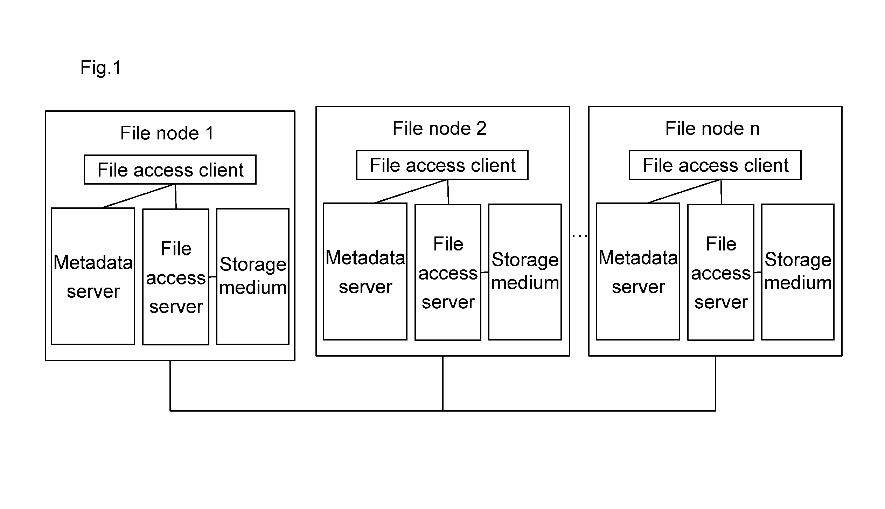

Fig. 1 shows a structural diagram of a distributed file system of the present invention. As shown in Fig. 1, the distributed file system of the present invention comprises multiple file nodes which can be divided into different levels according to the practical situations and needs. Each file node provides access to all the files in the whole distributed file system for users it faces, and has the same internal structure, mainly comprising a metadata server, a file access client, a file access server and a storage medium.

The metadata server is used for managing metadata, such as a file name of a file stored in the file node to which the metadata server belongs, a data block storage location, etc., and providing access operations, such as writing and querying metadata, for the file access client of the file node or file access clients of other file nodes; it is further used for implementing the processing functions of data block remote dispatching and aging data block.

The file access client is used for providing a calling interface for the user of the file node to which the file access client belongs, reading and writing metadata in the metadata server of the file node or metadata servers of other file nodes, and sending a request for accessing valid data of a relevant file to the file access server of the file node or file access servers of other file nodes, according to the acquired metadata.

The file access server is used for interacting with the storage medium in the file node to which the file access server belongs, to perform operations of reading and writing valid data; and in response to the request for accessing data from the file access client, reading data from the storage medium and returning the data to the file access client, or reading data from the file access client and writing the data into the storage medium.

The storage medium is used for storing valid data (valid data of files, namely actual content of files) of the file in a data block form and in a scattered way. The storage medium is generally multiple common Integrated Drive Electronics (IDE) disks or Serial Advanced Technology Attachment (SATA) disks.

The system of the present invention further comprises a configuration unit (not shown in Fig. 1), or each file node further comprises a broadcast unit (not shown in Fig. 1).

The configuration unit is used for configuring a dependence relationship among the file nodes in the distributed file system and sending the dependence relationship to each file node. The file access client can check the dependence relationship, when fails to find metadata or valid data (expressed as metadata/valid data) of a required file in the file node to which the configuration unit belongs, to determine the file node where the required file is stored. A dependence relationship table describes a dependence relationship among the file nodes so as to define that when the required metadata/valid data are not found in the current file node, it should be searched again in another file node having a dependence relationship with the current file node. For example, file node A has a dependence relationship with file node B, if the metadata/valid data required by the user cannot be found in the file node A, then searching the file node B directly.

The broadcast unit is used for sending a broadcast message to file access clients of other file nodes when the file access client of the file node to which the broadcast unit belongs fails to find the metadata/valid data of the required file, so as to inquire if the file required by the user of the file node has been stored in the other file nodes, determining the file node where the file required by the user of the file node is stored according to responses from the file access clients, and informing the file access client of the file node.

For supporting data block dispatching, the distributed file system of the present invention provides additional functions of remote access and dispatching to the file access client and the file access server of each node through the configuration unit or the broadcast unit.

At the same time, processing technology of aging data block is applied in the distributed file system of the present invention to save the storage space of each file node, to perfect the distributed file system.

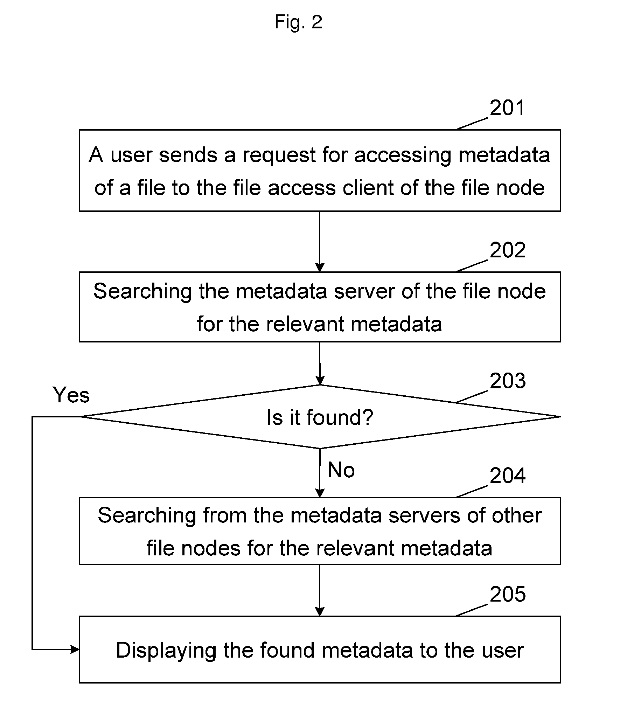

A file processing method of the system above comprises: a file distributed storage method, a file access method, a data block remote dispatching method and processing method of aging data block.
(1) The file distributed storage method comprises: storing all the files in various file nodes in a distributed way, wherein metadata of each file in each file node are managed through the metadata server, and valid data of each file are divided into a certain amount of data blocks to be stored in the storage medium in a scattered way.
(2) The file access method comprises a method for accessing metadata and a method for accessing valid data. Fig. 2 shows a flowchart of an embodiment of the method for accessing metadata of the distributed file system in the present invention, as shown in Fig. 2, the method comprising the following steps:
   Step 201: for each file node, a user sends a request for accessing metadata of a file to the file access client of a file node;
   Steps 202-203: the file access client of the file node searches for corresponding metadata from the metadata server of the file node to which the file access client belongs, if the corresponding metadata are found, turning to Step 205; or else, proceeding with Step 204;
   Step 204: the file access client of the current file node searches metadata servers of other file nodes for corresponding metadata;
   Step 205: the file access client of the current file node displays the found metadata to the user.

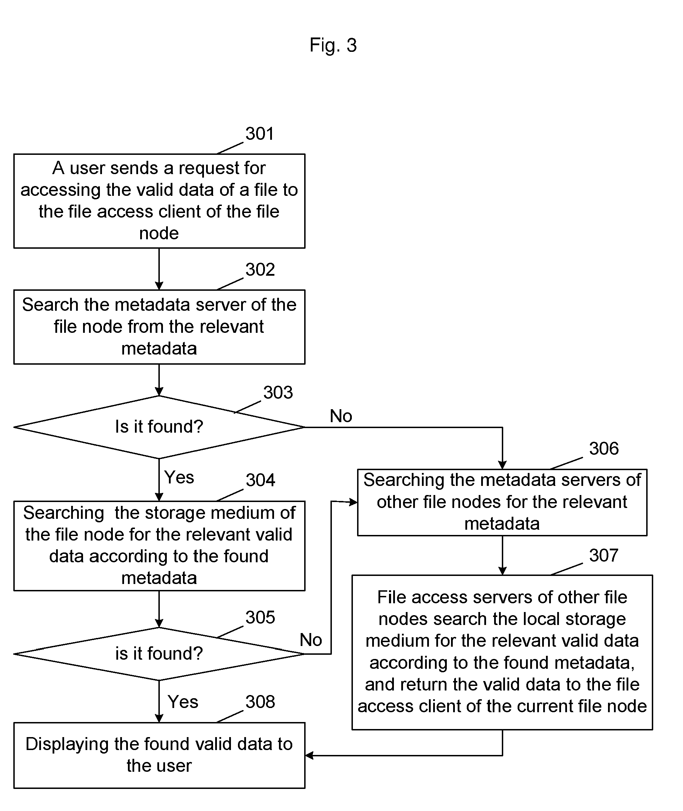

Fig. 3 shows a flowchart of an embodiment of the method for accessing valid data of the distributed file system in the present invention, as shown in Fig. 3, the method comprising the following steps:
Step 301: for each file node, a user sends a request for accessing valid data of a file to the file access client of a file node;
Steps 302-303: after receiving the request for accessing valid data of a file from the user, the file access client of the file node firstly searches for corresponding metadata from the metadata server of the file node to which the file access client belongs, if the corresponding metadata are found, proceeding with Step 304; or else, turning to Step 306;
Steps 304-305: the file access server of the file node searches the storage medium of the file node for corresponding valid data according to the found metadata, if the corresponding valid data are found, turning to Step 308; or else, proceeding with Step 306;
Step 306: the file access client of the current file node searches metadata servers of other file nodes for corresponding metadata;
Step 307: the file access client of the current file node sends a request for reading corresponding valid data to file access servers of other file nodes according to the metadata found in the metadata servers of other file nodes; the file access servers of other file nodes search local storage media for corresponding valid data according to the metadata and return the found valid data to the file access client of the current file node;
Step 308: the file access client of the current file node displays the found valid data to the user.

In the methods shown in Figs. 2 and 3, a file node which stores a file to be accessed by a user of the file node can be determined according to the dependence relationship table, which is preconfigured by the configuration unit, among various file nodes, or can be determined through a broadcast mode that the broadcast unit of the file node sends broadcast message to other file nodes for inquiry.
(3) The data block remote dispatching method comprises: for each file node, presetting an access hotspot value in the metadata server of a file node, and counting times of accessing valid data of a file which are not stored in the file node by a user of the file node; when the number of times of accessing valid data exceeds the access hotspot value, copying the valid data of the file from other file nodes to the local part through the file access client of the file node, and then writing the valid data into the storage medium of the file node; at the same time, creating metadata relevant to the valid data in the metadata server of the file node.
(4) The processing method of aging data block comprises: for each file node, presetting a minimum access value and a space utilization ratio threshold value in the metadata server of a file node, and counting times of accessing valid data of a file which are stored in the file node by a user of the file node; when the space utilization ratio of the storage medium of the file node exceeds the space utilization ratio threshold value, informing the storage medium of the file node to delete the valid data stored therein which are accessed for times less than the minimum access value, at the same time, deleting the metadata, which are relevant to the valid data which are accessed for times less than the minimum access value, stored in the metadata server of the file node.

The system structure and the file processing method of the present invention are described in detail below with reference to the practical application situations of the system in an IPTV service and the accompanying drawings.

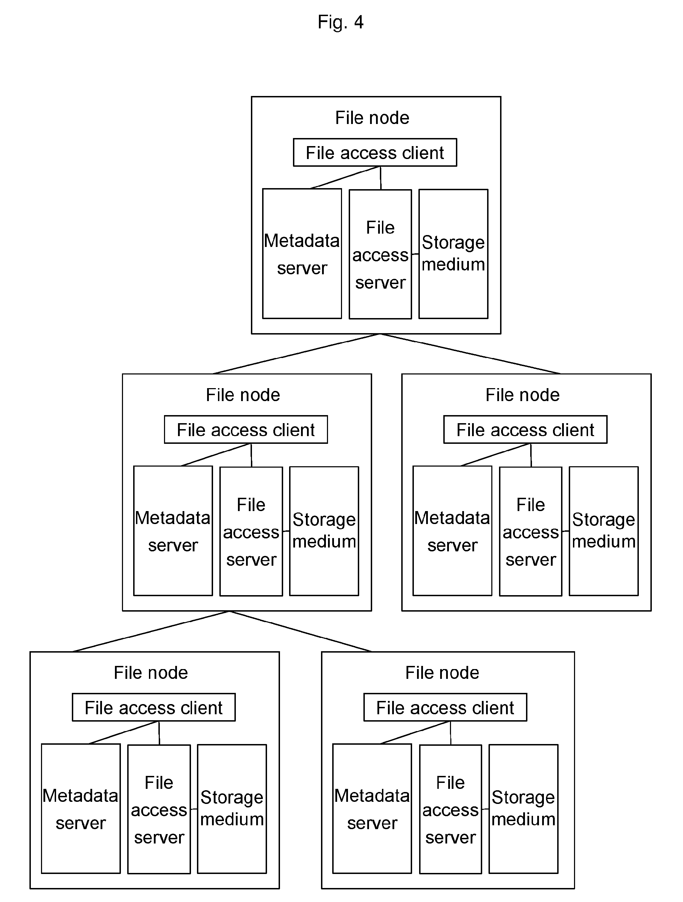

Fig. 4 shows a structural diagram of an embodiment of the distributed file system in the present invention, as shown in Fig. 4, the file processing method is described as follows:
first of all, a new film source is released in an IPTV system; according to service configuration of the IPTV system, the film source may be only released at a center node or a regional center node, that is, valid data of the film source are only stored in the center node or the regional center node. The releasing process is: at the center node or the regional center node, an administrator stores film source data in the storage medium of a file node by calling the file access client of the file node to perform a file writing operation, at the same time, creates corresponding metadata in the metadata server of the file node, thus, the release of the film source is completed;
thereafter, the film source above can be accessed directly in the file node when a user at the center node or the regional center node requests it; since the film source has not been released at the edge node, when a user at an edge node requests the film source, valid data of the file is requested and read from the center node or the regional center node through the remote access function (that is, the file access client of the edge node accesses the file access server of a node or regional center node, and acquires valid data stored in the storage medium of the accessed node or regional center node through the file access server) of the file access client.
If a great number of users at the edge node are requesting the film source, namely metadata and valid data to which the film source corresponds are accessed for many times for some time, then, after detecting the information, the file access client of the edge node copies, through data block dispatching, the valid data to which the film source corresponds from the center node or the regional center node to the edge node and stores the valid data in the storage medium of the edge node. Thus, when requesting the film source at the edge node, subsequent users can directly read the valid data at the edge node without acquiring the film source from the upper-level node.
In the embodiment, to save the storage space, the file access client at the edge node further performs aging processing on the valid data which are stored in the storage medium of the file node according to a certain aging strategy.

The embodiments above are only used for describing the technical solution of the present invention but not for limiting, and the present invention is described in detail with reference to preferred embodiments. Those skilled in the art should appreciate that various modifications and equivalent substitutes can be made to the technical solution of the present invention without departing from the scope and spirit of the present invention, and these modifications and equivalent substitutes belong to the scope of the appended claims of the present invention.

## Claims

1. A distributed file system supporting data block dispatching, comprising at least two file nodes, each file node comprising a metadata server, a file access client, a file access server and a storage medium; wherein
the metadata server is arranged to manage metadata of a file stored in a file node to which the metadata server belongs;
the file access client is arranged to provide a calling interface for a user of the file node to which the file access client belongs, read and write metadata in the metadata server of the file node or metadata servers of other file nodes, and send a request for reading and writing relevant valid data to the file access server of the file node or file access servers of other file nodes according to the metadata;
the file access server is arranged to interact with the storage medium in the file node to which the file access server belongs, complete reading and writing of valid data, respond to the request for accessing valid data from the file access client of the file node or file access clients of other file nodes, and read relevant valid data from the storage medium of the file node, according to the metadata in the metadata server and return the valid data to the file access client(s); and
the storage medium is arranged to store the valid data of the file stored in the file node to which the storage medium belongs.

2. The distributed file system according to claim 1, further comprising a configuration unit which is arranged to configure a dependence relationship among the file nodes in the distributed file system and send the dependence relationship to each file node;
wherein, the file access client is further arranged to check the dependence relationship from the configuration unit when metadata/valid data of a required file are not found in the file node to which the file access client belongs, and determine a file node where the required file is stored.

3. The distributed file system according to claim 1, wherein the each file node further comprises a broadcast unit which is arranged to send a broadcast message to file access clients of other file nodes when the file access client of the file node fails to find the metadata/valid data of the required file in the file node, and determine the file node where the file required by the user of the file node is stored, according to responses from the file access clients, and inform the file access client of the file node.

4. The distributed file system according to any of claims 1 to 3, wherein the metadata server is further arranged to preset an access hotspot value, count times of accessing valid data of a file which are not stored in the file node by the user of the file node to which the metadata server belongs, copy valid data which are accessed for times more than the access hotspot value from other file nodes to the local part through the file access client of the file node, and write the valid data into the storage medium of the file node through the file access server of the file node, at the same time, create metadata relevant to the valid data in the metadata server of the file node.

5. The distributed file system according to any of claims 1 to 3, wherein the metadata server is further arranged to preset a minimum access value and a space utilization ratio threshold value, count times of accessing valid data of the file which are stored in the file node by the user of the file node, and when a space utilization ratio of the storage medium of the file node exceeds the space utilization ratio threshold value, inform the storage medium of the file node to delete valid data stored therein which are accessed for times less than the minimum access value, at the same time, delete metadata, which are relevant to valid data which are accessed for times less than the minimum access value, stored in the metadata server of the file node.

6. A file processing method of a distributed file system, the distributed file system comprising at least two file nodes, each file node comprising a metadata server, a file access client, a file access server and a storage medium; the file processing method comprising:
storing different files in each file node in a scattered way;
for each file node, firstly accessing metadata/valid data of a required file in the file node by a user through the file access client of the file node; if the metadata/valid data of the required file are not found in the file node, accessing other nodes by the user through file access clients.

7. The file processing method of a distributed file system according to claim 6, before the step of accessing the metadata/valid data of the required file, the file processing method further comprising: configuring a dependence relationship table among the file nodes in the distributed file system, and sending the dependence relationship table to each file node; the other file nodes are ones having a dependence relationship with the currently accessed file node.

8. The file processing method of a distributed file system according to claim 6, wherein the step of accessing other file nodes through file access clients comprises:
for each file node, if the user of the file node fails to find the metadata/valid data of the required file in the file node, sending a broadcast message to all other file nodes to inquire if they store the required file, determining a file node where the file required by the user of the file node is stored according to responses from the other file nodes, and then directly accessing the metadata/valid data of the required file in the determined file node through the file access client.

9. The file processing method of a distributed file system according to any of claim 6 to 8, further comprising:
presetting an access hotspot value;
for each file node, counting times of accessing valid data of the file which are not stored in the file node by the user of the file node through the file access client; copying valid data which are accessed for times more than the access hotspot value from other file nodes to the local part through the file access client of the file node, and writing the valid data into the storage medium of the file node, at the same time, creating metadata relevant to the valid data in the metadata server of the file node.

10. The file processing method of a distributed file system according to any of claim 6 to 8, further comprising:
presetting a minimum access value and a space utilization ratio threshold value;
for each file node, counting times of accessing valid data of the file which are stored in the file node by the user of the file node, and when a space utilization ratio of the storage medium of the file node exceeds the space utilization ratio threshold value, deleting valid data, which are accessed for times less than the minimum access value, stored in the storage medium of the file node; at the same time, deleting metadata, which are relevant to valid data which are accessed for times less than the minimum access value, stored in the metadata server of the file node.
